Europäisches Patentamt

European Patent Office

Office européen des brevets

(19)

(11) **EP 1 123 259 B1**

## (12) FASCICULE DE BREVET EUROPEEN

(45) Date de publication et mention
de la délivrance du brevet:
**14.05.2003 Bulletin 2003/20**

(21) Numéro de dépôt: **99946262.5**

(22) Date de dépôt: **29.09.1999**

(51) Int Cl.7: **C02F 3/12**

(86) Numéro de dépôt international:
**PCT/FR99/02316**

(87) Numéro de publication internationale:
**WO 00/020344 (13.04.2000 Gazette 2000/15)**

(54) **PERFECTIONNEMENTS APPORTES AU TRAITEMENT D'EAUX USEES SELON LES PROCEDES PAR BOUES ACTIVEES**

VERBESSERUNGEN AN BELEBTSCHLAMMVERFAHREN

IMPROVEMENTS TO WASTE WATER TREATMENT USING ACTIVATED SLUDGE PROCESS

(84) Etats contractants désignés:
**AT BE CH CY DE DK ES FI FR GB GR IE IT LI LU MC NL PT SE**

(30) Priorité: **06.10.1998 FR 9812501**

(43) Date de publication de la demande:
**16.08.2001 Bulletin 2001/33**

(73) Titulaire: **Suez Lyonnaise des Eaux
75383 Paris Cédex 08 (FR)**

(72) Inventeurs:
• **BUJON, Bruno
F-78400 Chatou (FR)**
• **CAULET, Philippe
F-78870 Bailly (FR)**
• **PHILIPPE, Jean-Pierre
F-95220 Herblay (FR)**
• **CHATELLIER, Patrice
F-75018 Paris (FR)**

(74) Mandataire: **Armengaud Ainé, Alain et al
Cabinet ARMENGAUD AINE
3 Avenue Bugeaud
75116 Paris (FR)**

(56) Documents cités:
**DE-A- 3 912 921     DE-A- 4 137 905
US-A- 5 554 289**

• **PATENT ABSTRACTS OF JAPAN vol. 095, no. 002, 31 mars 1995 (1995-03-31) & JP 06 328092 A (MEIDENSHA CORP), 29 novembre 1994 (1994-11-29)**
• **PATENT ABSTRACTS OF JAPAN vol. 017, no. 073 (C-1026), 15 février 1993 (1993-02-15) & JP 04 277086 A (ASAHI BREWERIES LTD), 2 octobre 1992 (1992-10-02)**
• **PATENT ABSTRACTS OF JAPAN vol. 008, no. 260 (C-254), 29 novembre 1984 (1984-11-29) & JP 59 139996 A (HITACHI SEISAKUSHO KK;OTHERS: 01), 11 août 1984 (1984-08-11)**
• **PATENT ABSTRACTS OF JAPAN vol. 095, no. 003, 28 avril 1995 (1995-04-28) & JP 06 335694 A (MEIDENSHA CORP), 6 décembre 1994 (1994-12-06)**
• **PATENT ABSTRACTS OF JAPAN vol. 018, no. 558 (C-1264), 25 octobre 1994 (1994-10-25) & JP 06 198297 A (NEYAGAWA NANBU KOUIKI GESUIDOU KUMIAI;OTHERS: 01), 19 juillet 1994 (1994-07-19)**

## Description

La présente invention concerne des perfectionnements apportés au traitement d'eaux usées selon les procédés par boues activées. Elle vise plus particulièrement un procédé ainsi qu'un dispositif de contrôle du temps de séjour des boues en clarification dans un procédé de traitement d'eaux usées par boues activées comportant une recirculation des boues activées de l'étape de clarification vers l'étape d'aération.

On sait que dans de tels procédés à boues activées, la recirculation des boues est un élément sensible dans le fonctionnement global des stations d'assainissement. Le rôle des clarificateurs secondaires consiste à séparer les boues de l'eau traitée, et pour cela une étape de concentration des boues est indispensable dans l'ouvrage. Cette phase de concentration nécessite un temps de séjour imposé des boues dans le clarificateur, et, si ce temps de séjour n'est pas maîtrisé, le procédé dérive vers une logique de dysfonctionnement.

Un temps de séjour trop long induit dans un premier temps des conditions d'anoxie, avec un effet immédiat de dénitrification potentielle et l'apparition d'écumes en surface de clarificateurs. Dans un second temps les boues entrent dans des conditions d'anaérobie, dont les répercussions sont souvent désastreuses au niveau de la filière eau et du traitement des boues. En effet, le développement de micro-organismes filamenteux est favorisé, ce qui génère sur l'ensemble de la station des problèmes de moussage et de mauvaise décantation des flocs (élévation de l'indice de Mohlman). Le risque de départ de boues est alors augmenté en cas d'à-coup hydraulique. Les conditions anaérobies sont de plus totalement incompatibles avec les procédés de déphosphatation biologique, et dans ce cas, le relargage du phosphore au niveau du clarificateur entraîne une non-conformité immédiate des rejets. Ces événements sont ainsi caractéristiques d'un dysfonctionnement majeur sur la filière Eau. En parallèle et d'un point de vue économique direct, le traitement des boues n'est pas optimisé lorsque les propriétés de décantation des flocs sont médiocres, et ce quelle que soit la filière de traitement rencontrée. Les temps de fonctionnement des équipements de la filière de traitement des boues sont allongés, les siccités sont réduites et, directement, les volumes de boues extraits sont augmentés pour une masse de matière sèche traitée identique.

Dans l'étape de clarification, le temps de séjour des boues doit donc rester limité, au risque d'entraîner des dysfonctionnements dans le traitement des eaux Cette limite est de l'ordre de 2 heures pour les procédés à boues activées en aération prolongée. Il est moindre pour des conditions de moyenne ou de forte charge.

D'un autre coté, un temps de séjour des boues en clarification trop court ou variable peut aussi être un facteur limitant pour les filières de traitement des boues.

Il induit en effet une concentration en boues non adaptée à certains ouvrages d'épaississement et de déshydratation lorsque l'extraction de celles-ci s'effectue à partir de la ligne de recirculation. C'est généralement le cas des petites et moyennes installations équipées d'ouvrages d'épaississement par égouttage. La dilution des boues en entrée de ce type d'équipement conduit à des taux de capture insuffisants ou à la nécessité d'un dosage excessif de polymère de floculation, entraînant des risques de colmatage. Les variations de charge sur ces appareils de conditionnement entraînent fréquemment des dysfonctionnements, tels que fluage ou colmatage, qui sont liés aux modifications des conditions de fonctionnement prédéfinies lors des réglages initiaux. La concentration minimale admise sur les grilles ou tables d'égouttage est de l'ordre de 6 g/l. Les variations de charges supportées par ce type d'équipement sont de l'ordre de 10 à 20 %. Ces conditions sur la concentration, qui correspond à la concentration rencontrée dans le puits à boues, sont directement liées à une contrainte de temps de séjour minimale en clarification. Ce temps de séjour minimal est lui même tributaire des propriétés de décantabilité des boues.

Le maintien et le contrôle d'un temps de séjour moyen des boues en clarification sont donc de première importance pour assurer qualité, fiabilité et économie du traitement. C'est là le problème technique qu'entend résoudre la présente invention.

Dans la technique du traitement des eaux, en ce qui concerne la fonction recirculation des boues activées, on identifie deux types de recirculation sur une station d'épuration :

- les recirculations qui ramènent les boues du clarificateur vers le bassin d'aération: l'objectif est de recycler une partie de la boue biologique afin de ne pas appauvrir la masse épuratoire du bassin d'aération.

- les recirculations de liqueurs mixtes qui existent sur les stations comportant un bassin d'anoxie et un bassin d'aération : elles reprennent des boues du bassin d'aération riches en nitrates pour les ramener en zone anoxie afin que la dénitrification puisse réduire les teneurs des rejets.

Le procédé objet de la présente invention concerne la recirculation des boues activées du clarificateur vers le bassin d'aération. Étant donné que les divers schémas de recirculation des boues activées du clarificateur vers le bassin d'aération font partie des connaissances techniques classiques de l'homme de l'art dans le domaine du traitement des eaux, on ne les décrira pas. Le lecteur peut se référer à cet égard, au **Mémento Technique de l'Eau**, Neuvième Edition (1989).

On exposera maintenant le principe général de la gestion de la recirculation des boues activées dans le traitement des eaux.

Les objectifs d'une gestion adaptée des recirculations de boues doivent répondre aux critères ci-après :

• éviter la mise en anaérobiose des boues dans le clarificateur pour réduire tout risque de dysfonctionnement,

• adapter le mode de fonctionnement de la station aux conditions rencontrées en exploitation (masses de boues dans le système, propriétés de décantation des boues, événements pluvieux,...), de façon à éviter notamment les départs du lit de boue,

• gérer la répartition de la masse totale des boues entre le bassin biologique et le clarificateur pour fiabiliser le traitement biologique.

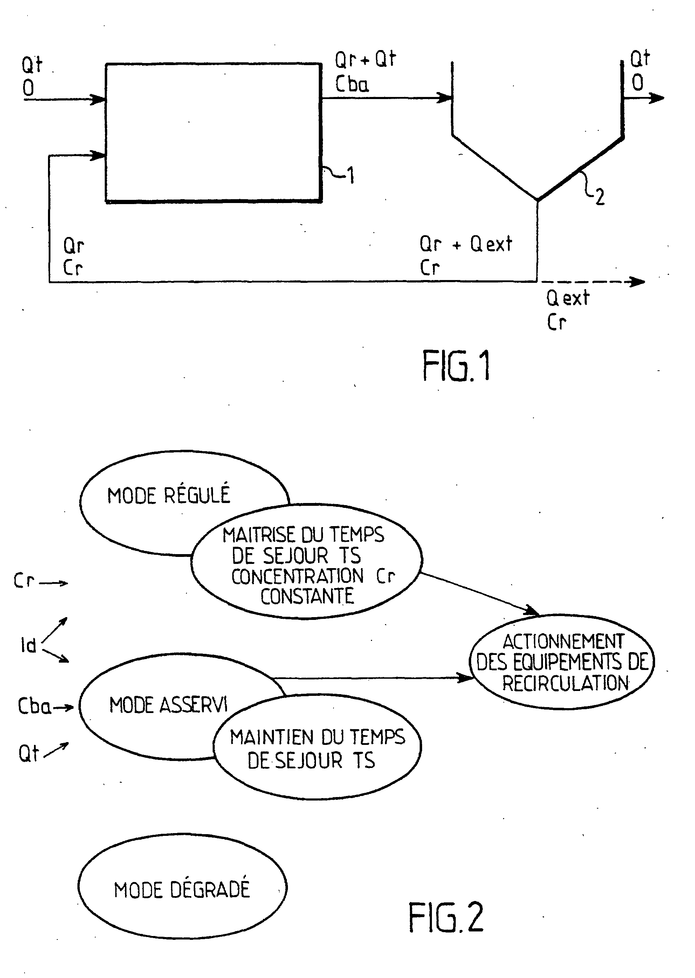

On se réfère à la figure 1 des dessins annexés qui est un schéma illustrant la construction des bilans de flux de boues et sur lequel on a représenté en 1 le bassin d'aération et en 2 le clarificateur.

Le taux de recirculation des boues du clarificateur 2 vers le bassin d'aération 1 est par définition le rapport entre le débit de recirculation et le débit traversier de la station.

$$\tau Rec = Qr / Qt$$

$\tau Rec$ désigne le taux de recirculation (O< $\tau Rec$ < 1)
Qr désigne le débit de recirculation (m3/h)
Qt désigne le débit traversier (m3/h)

Ce taux de recirculation est défini par les conditions rencontrées sur le site, il doit obéir à un bilan global équilibré des flux de boues entrants et sortants du clarificateur.

$$(Qt + Qr) * Cba = Qr * Cr$$

Cba est la concentration de boues dans le bassin d'aération (g/l)
Cr est la concentration de boues en recirculation (g/l)

Le terme de stockage est ici négligé, tout comme le flux de sortie en rejets eau traitée.

Cette équation conduit au calcul du taux de recirculation $\tau Rec$

$$\tau Rec = Qr/Qt = Cba / (Cr - Cba)$$

Cba est un paramètre opérationnel, directement mesurable dans le bassin d'aération. Cr quant à lui doit être maîtrisé de façon à répondre aux impératifs de temps de séjour des boues dans le clarificateur. En effet, il a été vu de façon empirique que le temps de séjour des boues est lié à l'indice de Mohlman, représentatif des propriétés de décantation et d'épaississement des boues, et aux concentrations de boues en bassin d'aération et en recirculation. On a établit la corrélation suivante entre ces variables :

$$TS/60 = (CrIM / 1000)^3 - (CbaIM / 1000)^3$$

TS est le temps de séjour des boues en clarification (min)
IM est l' indice de Mohiman (ml/g)

Cette formule est la relation de référence pour la logique de gestion automatisée de la recirculation. Elle est fondée sur une formule du même type publiée par l'ATV (ATV standard, A 131. (1991). Dimensioning of single stage activated sludge plants upwards from 5 000 total inhabitant and population équivalents. *Abwassertechnische Vereinigung e. V.* St. Augustin) :

$$Cr = \frac{1000\sqrt[3]{TS/60}}{IM}$$

Dans les cas où la mesure de l'indice de Mohlman n'est pas représentative du fait du manque de décantation des boues, un indice de décantation Id peut être défini de manière sécuritaire, puis utilisé dans ces formules.

Id est l'indice de décantation non dilué (ml/g)

Dans la pratique, le temps de séjour des boues, maximal admissible en clarification, est uniquement tributaire de la charge massique de la station. A titre indicatif, il est de l'ordre de 120 minutes pour une faible charge, il peut être réduit à 40 minutes pour les fortes charges.

Pour une charge donnée, l'indice de décantation et la concentration de boues en bassin d'aération étant des paramètres d'exploitation, il est ainsi possible de définir une consigne de concentration de boues en recirculation qui satisfasse de manière globale au respect du temps de séjour maximal autorisé en clarification, contrainte associée à la fiabilisation du traitement des eaux.

Le taux de recirculation défini sera ainsi fonction de la concentration de boues dans le bassin d'aération et de manière indirecte de l'indice de décantation des boues et de la charge massique de la station, c'est à dire des conditions d'exploitation rencontrées sur le site. Ce taux de recirculation peut donc s'écrire :

$$\tau Rec = Qr/Qt = Cba / (Cr\ cons - Cba)$$

avec $Cr\ cons = 1000/IM\ (TS_{MAX}/\ 60 + (CbalM/1000)^3)^{1/3}$
Cr cons est la consigne de concentration de boues en recirculation (g/l)
TS max est le temps de séjour maximal admissible des boues en clarification (min)

En fait, pour être rigoureux, il faudrait compléter l'équation de bilan par le flux de boues extrait vers la filière de traitement des boues. Cette quantité peut parfois être prépondérante pour les flux sortants sur les petites installations.

$$(Qt + Qr) * Cba = (Qr + Qext) * Cr\ cons$$

Qext est le débit d'extraction (m3/h)

Le débit de recirculation calculé est alors :

$$Qr = [(Qt * Cba) - (Qext * Cr\ cons)] / (Cr\ cons - Cba)$$

On exposera maintenant les modes de gestion actuellement connus en ce qui concerne la recirculation des boues dans le domaine du traitement des eaux par boues activées.

En général, deux modes de gestion sont utilisés :

- le débit recirculé est constant, et représente 100 à 150 % du débit journalier d'eaux usées prévu sur la station. Au delà d'un seuil limite du débit traversier, un forçage des équipements de recirculation peut être commandé.

- le débit de recirculation est asservi au débit entrant, de façon proportionnelle.

Pour proportionner les taux de recirculation, le fonctionnement des équipements est continu à vitesse fixe, ou syncopé par asservissement à une horloge ou à un doseur cyclique. Sur de grandes installations, des régulations spécifiques existent avec l'utilisation combinée des capteurs de débits traversier, de recirculation, poids de boues en bassin d'aération et recirculation, hauteur de voile de boues, et turbidité en sortie.

Une recirculation bien gérée favorise une bonne qualité des boues et la clarification des eaux. On ne doit pas stocker les boues dans le clarificateur pour éviter la fermentation. Les périodes de marche doivent toujours être supérieures au temps de rotation du pont racleur du clarificateur ou au moins gérées sur des fréquences anti-harmoniques.

Si la concentration des boues est adaptée et si la recirculation est bien gérée, le voile de boue n'est pas visible et n'est pas détectable au disque de Secchi : le voile de boue est à plus de 1 m de profondeur.

Ces modes de gestion selon la technique antérieure présente les inconvénients suivants :

1 - Les modes classiques de gestion de la recirculation, à débit fixé ou asservi, restent dépendants de la définition d'un taux de recirculation moyen, donc d'un réglage de commande lié aux conditions d'exploitation. Trop souvent, les taux de recirculation effectifs sont définis lors du dimensionnement et de la mise en service des installations. Ils ne sont que rarement réajustés à l'exception des périodes de dysfonctionnements (exemple type : on observe une fuite du lit de boue, la réaction immédiate est d'augmenter la recirculation. Cette réaction d'exploitation intervient malheureusement trop tard). Une des règles essentielles de gestion serait de réactualiser les taux de recirculation lorsqu'une mesure de l'indice de Mohlman et/ou de concentration de boues dans le bassin d'aération est réalisée, et de modifier les réglages en conséquence. Outre ce principal défaut, la gestion de la recirculation par débit fixé a l'inconvénient de mal prendre en compte les événements hydrauliques rencontrés. La gestion des pointes est rarement modifiée en fonction des régimes quotidiens (jours ouvrés ou fins de semaine), les différents régimes saisonniers sont traités de la même façon (périodes estivales, périodes pluvieuses, activités temporaires (vendanges,...), les forçages actionnés par temps de pluie sont aveugles à l'historique et à l'environnement de l'événement (pluie brutale ou régulière, courte ou persistante).

2 - Le mode de gestion asservi au débit semble quant à lui plus adapté dans ce domaine. D'un point de vue rigoureux toutefois, il apparaît que les dynamiques de transfert des boues sur le système bassin d'aération / clarificateur n'aient pas été prises en compte jusqu'à présent. En effet, la réponse du système est lente et amortie par des effets tampons, et la réaction par rapport à un événement rapide ne peut être simplement commandée par une action proportionnelle à l'excitation.

3 - Enfin, le mode de commande des équipements de recirculation est d'ordinaire syncopé, et les modifications de réglages conduisent souvent à un phasage des fréquences de syncopage avec le temps de rotation du pont racleur du clarificateur. Les fréquences dites anti-harmoniques ne sont plus respectées, et les boues recirculées proviennent toujours des mêmes zones du radier du clarificateur. En effet, le racleur a une action principalement déstructurante, car la compacité relative du voile de boue limite une reprise homogène des boues par aspiration vers le puits à boues. Le passage du racleur fluidifie localement le voile de boues et favorise la reprise des boues fraîchement déstructurées lors de l'activation des pompes de recirculation. Sur des fréquences harmoniques (15 minutes de marche, 15 minutes d'arrêt, pour un temps de rotation du pont de 30 minutes par exemple), la reprise des boues n'est effective que sur une partie du clarificateur.

Une gestion inadapté de la recirculation des boues présente les risques exposés ci-après :

a) - Recirculations trop importantes :

Les risques encourus par une recirculation trop importante sont une vitesse trop importante au niveau de la « jupe » interne du décanteur (« clifford ») jouant le rôle de répartiteur du flux à traiter (décantation gênée) et un déséquilibre à l'interface eau-boue : la vitesse de pompage des boues sera bien supérieure à la vitesse de chute des particules créant ainsi un court-circuit hydraulique. De plus des débits de recirculation trop importants réduisent les concentrations de boues en recirculation, ce qui peut être limitant pour l'alimentation de la filière de traitement des boues.

b) - Recirculations insuffisantes :

Les risques encourus en conséquence d'une recirculation insuffisante sont liés à une éventuelle dénitrification non contrôlée et au passage des boues en conditions anaérobies dans le clarificateurs (relargage du phosphore, favorisation du développement des filamenteux et mousses, ...). Le clarificateur se transforme régulièrement en stockeur et épaississeur de boue.

c) - Recirculation syncopée sur fréquence antiharmonique :

Les risques sont identiques à ceux d'une recirculation insuffisante, mais de façon moins marquée, par la création de zones ou poches de boues non reprises dont le temps de séjour est important.

Dans le cas des clarificateurs à ponts sucés, le débit de recirculation ne doit jamais être :

- inférieur au débit de désamorçage du siphon
- tel qu'il y ait déséquilibre des pertes de charges sur les tubes suceurs (ceci dépend étroitement de la distribution des concentrations en boue sur le radier).

Compte-tenu du fait que les stratégies existantes de gestion de la recirculation des boues activées ne donnent pas satisfaction, la présente invention s'est fixée pour objectif d'apporter un procédé de gestion automatisée de cette recirculation, élaboré dans le but de maîtriser le temps de séjour des boues en clarification secondaire dans les procédés à boues activées. Son objectif prioritaire est la limitation du temps de séjour des boues dans le clarificateur en deçà d'une limite maximale, dans le but de fiabiliser le traitement des eaux. Son objectif second est de faciliter la gestion des filières de traitement des boues utilisant, par exemple, des équipements d'égouttage, par le maintien d'une concentration constante en recirculation.

En conséquence, la présente invention a pour objet un procédé de contrôle du temps de séjour des boues en clarification dans un procédé de traitement d'eaux usées par boues activées comportant une recirculation des boues activées de l'étape de clarification vers les bassins biologiques caractérisé en ce que l'on module le débit de recirculation des boues (Qr) de façon à maintenir une concentration constante des boues recirculées (Cr) tout en garantissant un temps de séjour (TS) des boues en clarification inférieur à une valeur critique (TS max).

Selon un mode de mise en oeuvre de l'invention , le débit de recirculation des boues (Qr) est modulé en fonction d'un signal représentant le débit d'eau (Qt) traversant l'installation, afin de limiter le temps de séjour des boues dans l'étape de clarification.

Selon un autre mode de mise en oeuvre, lorsque la validité du signal représentant le débit d'eau qui traverse l'installation n'est pas reconnue, le contrôle de la recirculation des boues s'effectue selon le mode de gestion de repli de la station de traitement d'eau.

Selon un autre mode de mise en oeuvre du procédé selon l'invention, le débit de recirculation des boues (Qr) est modulé en fonction d'un signal représentant la concentration de boues en recirculation (Cr), obtenu à partir d'un capteur positionné dans la ligne de recirculation, ce signal étant délivré à une logique automatisée qui module le débit de recirculation (Qr) en fonction de l'évolution du signal reçu, afin de maintenir constante la concentration de boues en recirculation (Cr) ; en cas de doutes sur la représentativité dudit signal, le contrôle de la recirculation des boues s'effectue automatiquement selon un mode de gestion asservie ayant pour objectif de limiter le temps de séjour des boues dans l'étape de clarification, ledit mode de gestion asservie étant géré sur l'analyse des valeurs de la concentration des boues (Cba) dans le bassin biologique et sur le débit d'eau (Qt) traversant l'installation.

Selon une autre caractéristique du procédé selon l'invention défini ci-dessus, on mesure périodiquement le volume des boues décantées afin d'évaluer l'indice de décantation des boues (Id) ainsi que la concentration des boues dans le bassin biologique et de déterminer les valeurs de consigne de l'automate de gestion.

Selon la présente invention, la logique de gestion automatisée de la recirculation des boues est conçue de façon à :

- réactualiser régulièrement le taux de recirculation

moyen ($\tau$ Rec) des boues afin de l'adapter aux conditions de la station de traitement, à partir de la valeur de la concentration des boues (Cba) dans le bassin d'aération et de la réactualisation de l'indice de décantation (Id) ;

- répondre instantanément aux évènements hydrauliques et gérer les délais d'action en fonction du temps de réponse du système clarificateur-bassin d'aération en se basant sur l'évolution du débit traversier (Qt) et,

- maintenir constante la concentration des boues en recirculation (Cr).

L'invention vise également des dispositifs pour la mise en oeuvre du procédé défini ci-dessus.

Selon un premier exemple de réalisation, ce dispositif comporte :

- des capteurs permettant respectivement de mesurer le débit traversier (Qt);
- des moyens assurant une commande modulée dudit débit de recirculation des boues activées (Qr),
- des moyens permettant de mesurer le volume des boues décantées et d'évaluer l'indice de décantation (Id) et la concentration de boues (Cba) dans le bassin biologique,
- un automate assurant la gestion automatisée de la recirculation qui comporte deux modules principaux, servis par un étage commun d'entrée de signaux:

  - un premier module assurant l'interface entre l'utilisateur et l'automate et permettant d'afficher une consigne de concentration (Cr) ;
  - un second module constituant le bloc de commande des débits de recirculation et qui comprend :

    - une logique de commande assurant la maîtrise du temps de séjour des boues dans le clarificateur à partir du débit traversier (Qt), pour calculer une commande du débit de recirculation (Qr),
    - un module pour la gestion des actions de sécurisation de la logique de gestion des moyens de recirculation et,
    - un étage de paramétrage, de réception, d'analyse de traitement et de validation des signaux issus des capteurs et témoins logiques de marche des équipements pour alimenter lesdits modules.

Selon un second mode de réalisation, ce dispositif comporte :

- des capteurs permettant respectivement de mesurer :

  - la concentration des boues (Cr) dans la ligne de recirculation des boues activées du clarificateur vers le bassin d'aération,
  - la concentration des boues (Cba) dans le bassin d'aération,
  - le débit traversier (Qt)

- des moyens assurant une commande modulée dudit débit de recirculation des boues activées (Qr),
- des moyens permettant de mesurer le volume des boues décantées et d'évaluer l'indice de décantation (Id),
- un automate assurant la gestion automatisée de la recirculation qui comporte trois modules principaux, servis par un étage commun d'entrée de signaux :

  - un premier module assurant l'interface entre l'utilisateur et l'automate et permettant d'afficher une consigne de concentration (Cr)
  - un second module constituant le bloc de commande des débits de recirculation et qui comprend :

    - une logique de commande assurant le pilotage et la régulation du débit de recirculation (Qr) à partir de la mesure de la concentration des boues (Cr) pour maintenir constante la concentration de recirculation,
    - une logique de commande assurant la maîtrise du temps de séjour des boues dans le clarificateur à partir des mesures de la concentration des boues dans le bassin d'aération (Cba) et du débit traversier (Qt), pour calculer une commande du débit de recirculation (Qr),
    - un module pour la gestion des actions de sécurisation de la logique de gestion des moyens de recirculation et,

  - un troisième module assurant un calcul de la masse de boues présente dans le système clarificateur/bassin biologique en vue de fixer et de rythmer l'extraction des boues et,

- un étage de paramétrage, de réception, d'analyse de traitement et de validation des signaux issus des capteurs et témoins logiques de marche des équipements pour alimenter lesdits modules.

Ainsi qu'on le comprend, le procédé objet de la présente invention permet de moduler le débit de recirculation, de façon à maintenir une concentration de boues recirculées constante, tout en garantissant un temps de séjour inférieur à la valeur critique. Une de ses fonctions permet en outre d'évaluer la masse totale de boues présentes dans le système, de façon à assister la gestion des extractions. Enfin, la sécurisation de l'automate prévient toute dérive éventuelle de la qualité des boues ou des organes de la fonction recirculation, et informe des maintenances exceptionnelles à assurer.

Le procédé objet de l'invention permet notamment d'éliminer le risque d'apparition de bactéries filamenteuses du seul fait de la gestion des clarificateurs secondaires. Il fiabilise ainsi la filière de traitement des eaux et permet d'optimiser les performances de la filière boues par la conservation de la qualité des boues. La constance de la concentration d'extraction, la possibilité de reconduction des réglages prédéfinis ou de mise en route à toute heure des équipements permettent enfin d'assister les opérations relatives à l'épaississement par égouttage. L'intérêt de la mise en application de cette gestion automatisée peut s'exprimer en terme de coûts d'exploitation :

- Amélioration ou maintien de la qualité des boues, traduite par un indice de Mohlman faible (augmentation de la capacité et réduction du temps de fonctionnement des équipements de traitement des boues, amélioration siccité et réduction des volumes et des coûts d'évacuation des boues produites, dosage réactifs, réduction des retours en tête, ...).

- Assistance pour le traitement des boues et suppression des dysfonctionnements en égouttage (organisation main d'oeuvre en exploitation).

- Conformité des rejets (Conventions et Primes Agences de l'Eau).

- Prévention des dysfonctionnement, notamment sous des conditions extrêmes d'exploitation et durant des événements pluvieux (organisation main d'oeuvre et prévention de coûts de traitement des dysfonctionnements).

- Aspect visuel du clarificateur.

D'autres caractéristiques et avantages de la présente invention ressortiront de la lecture de la description faite ci-après en référence aux dessins annexés qui en illustrent divers exemples de mise en oeuvre ou de réalisation. Sur les dessins :

- La figure 1 est un schéma illustrant une installation de traitement d'eau à laquelle s'applique l'invention, ce schéma ayant été utilisé dans la partie du préambule ci-dessus relatif à l'exposé du principe général de la gestion de recirculation des boues ;
- La figure 2 est un schéma illustrant le mode de fonctionnement de la logique de gestion mise en oeuvre par le procédé selon l'invention ;
- La figure 3 illustre, de façon schématique, selon un schéma par blocs, la structure de la logique de gestion de la recirculation des boues mise en oeuvre par l'invention ;
- La figure 4 illustre de façon schématique l'étage de l'installation selon l'invention permettant d'alimenter les différents modules de la logique de gestion ;
- La figure 5 est une courbe illustrant l'évolution du taux de recirculation des boues en fonction des conditions d'exploitation ;
- La figure 6 est une courbe illustrant la dynamique de l'évolution des masses de boues en clarification ;
- La figure 7 est une courbe permettant d'illustrer l'action de maintien d'un fort débit de recirculation pour le déstockage après un événement pluvieux ;
- La figure 8 est un graphique illustrant l'action du maintien d'une concentration constante des boues en recirculation en conditions pluvieuses et,
- Les figures 9 à 12 sont des enregistrement qui illustrent les différents modes de fonctionnement du procédé selon l'invention dans diverses conditions.

On se réfère à la figure 2. L'action de l'automate mis en oeuvre par le procédé et le dispositif objet de la présente invention consiste à moduler le débit de recirculation des boues $(Qr)$ en agissant sur les équipements de recirculation, c'est-à-dire sur les pompes qui sont prévues pour assurer la recirculation des boues activées. Ces pompes peuvent être alimentées à fréquence variable, à l'aide d'un convertisseur ou à fréquences fixes par l'intermédiaire du réseau. De préférence, on utilisera un convertisseur de fréquences.

Cette action permet d'atteindre une valeur consigne de concentration (Cr cons) qui est dépendante des conditions d'exploitation du site. Le procédé selon l'invention module le débit de recirculation $(Qr)$ en fonction d'un signal « poids de boues recirculation » $(Cr)$ provenant d'un capteur situé dans le puits à boues de l'installation. Suivant l'évolution du signal reçu, la logique automatisée va moduler le débit de recirculation afin de maintenir une concentration de recirculation la plus constante possible.

Lorsqu'un doute est émis sur la représentativité du signal $(Cr)$ délivré par ledit capteur, l'automate passe instantanément sous un mode de gestion asservie. L'objectif unique de cette logique sécurisée est de limiter le temps de séjour des boues dans le clarificateur. La constance de la concentration de recirculation n'est plus garantie. Ce mode asservi est géré sur l'analyse des valeurs du poids de boues dans le bassin d'aération $(Cba)$ et du débit traversant l'installation c'est-à-dire du débit traversier $(Qt)$, uniquement.

Lorsque la validité des mesures de l'ensemble des capteurs n'est plus reconnue, l'automate se positionne en mode « dégradé » et la recirculation est soumise au mode de gestion de repli de la station.

La logique de gestion automatisée de la recirculation des boues selon la présente invention est donc tributaire du fonctionnement des capteurs et de l'indication régulière de l'indice de décantation des boues $(Id)$.

C'est la raison pour laquelle selon la présente invention, on effectue régulièrement, par exemple une fois tous les huit jours au maximum, une mesure du volume des boues décantées permettant d'évaluer cet indice de décantation et donc de déterminer les valeurs de consigne de l'automate pour réguler au plus juste le débit de recirculation.

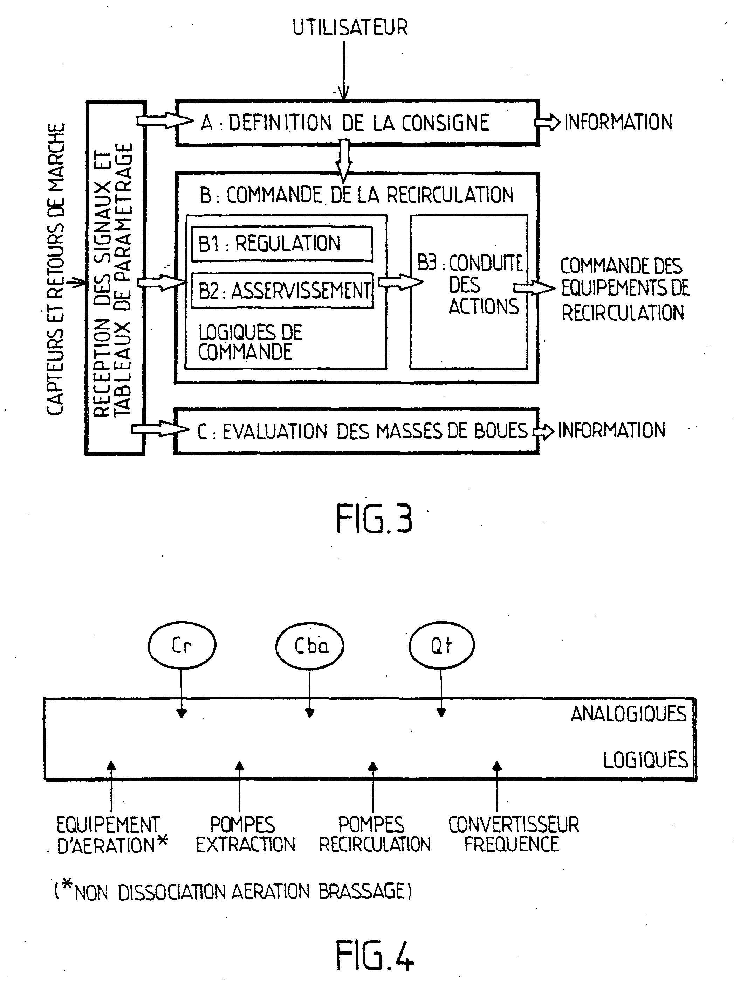

On se réfère maintenant aux figures 3 et 4 des dessins annexés illustrant de façon schématique la structure de la logique automatisée mise en oeuvre dans le procédé et le dispositif objets de l'invention.

La logique de gestion automatisée de la recirculation selon l'invention se compose de trois modules principaux, servis par un étage commun d'entrée de signaux :

Le module A est une interface entre utilisateur et automate, qui permet le renseignement manuel de mesures et de souhaits de consigne, la vérification de compatibilité entre contraintes du procédé et consignes souhaitées, et l'affichage des données de fonctionnement et informations issues de l'automate.

Le module B est le bloc de commande des débits de recirculation. Il se décompose en deux logiques de commande B1 et 82, activées selon la disponibilité des sources d'information, et d'un mode commun de conduite des actions B3 pour le pilotage des équipements de recirculation.

- La logique de commande B1 est un mode de régulation. Elle a pour objectif de maintenir la concentration de recirculation (Cr) à ± 1 g/l autour de la valeur de consigne, de façon à garantir le temps de séjour des boues en clarification et à faciliter la gestion des extractions. La mesure de la concentration des boues en recirculation est ici utilisée pour piloter et réguler le débit de recirculation (Qr). Cette régulation permet automatiquement de vérifier les trois principes de la logique de gestion du procédé selon l'invention qui seront expliqués ci-après : l'adaptation des taux de recirculation aux conditions d'exploitation, la gestion des délais d'action sur les événements hydrauliques, et le maintien d'une concentration stable en recirculation. Il s'agit là du mode de gestion privilégié de l'invention.

- La logique B2 est un mode d'asservissement. Les mesures de la concentration des boues (Cba) dans le bassin d'aération et du débit traversier (Qt) sont ici utilisées, pour permettre le calcul d'une commande de débit de recirculation (Qr). Il n'y a pas de contrôle de l'action exercée, c'est ainsi un mode d'asservissement pur. Son intérêt réside dans l'adaptation des taux de recirculation (τ Rec) aux conditions d'exploitation, et à la gestion des délais d'action sur les événements hydrauliques importants. Selon le principe d'équilibre des flux, ce mode de gestion par asservissement devrait permettre de maintenir la concentration de boues en recirculation (Cr) sur une gamme de variation restreinte. Ce mode de gestion par asservissement, constitue le mode de gestion sécurisé du procédé de l'invention et il correspond à l'objectif de la maîtrise du temps de séjour en clarification.

- Le mode de conduite des actions B3 permet de définir les combinaisons d'équipements à utiliser, ainsi qu'on l'a vu ci-dessus, les pompes assurant la recirculation des boues du clarificateur vers le bassin d'aération peuvent être alimentées à fréquence variable (convertisseur) ou à fréquence fixe (réseau). Le convertisseur ne sert qu'une pompe à la fois, les autres étant à l'arrêt ou en alimentation fixe. La valeur de commande de débit issue des logiques est exprimée en m3/h, et doit être traduite en combinaison d'équipements et en fréquences d'alimentation pour atteindre la consigne de débit de recirculation. Le module B3 permet en outre de gérer les actions de sécurisation de la logique de gestion de la recirculation.

Enfin, le module C permet d'estimer la masse de boues présentes dans le système bassin d'aération / clarificateur, valeur automatiquement réactualisée pour l'exploitation. Cette information permet de suivre ou fixer les rythmes d'extraction des boues sur la station. Une estimation rapide pourrait être effectuée à partir de la lecture de la concentration des boues dans le bassin d'aération (Cba), sous la condition que la masse de boues contenue dans le clarificateur est négligeable ou accessible par calcul d'équilibre. Mais il est difficile de faire une telle estimation avec certitude durant la journée, car ces hypothèses ne sont pas vérifiées. D'une part la masse de boues dans le clarificateur n'est pas négligeable dans les périodes diurnes, à plus forte raison lors de forts événements hydrauliques. D'autre part, son évaluation n'est pas possible tant qu'un régime d'équilibre n'est pas atteint, et les évolutions régulières du débit durant la journée portent la station sur des régimes fréquents de transition. Le module C propose un calcul de la masse de boues du système établi et réactualisé automatiquement lorsqu'un régime d'équilibre a été déterminé.

Enfin, le dispositif selon l'invention comporte en outre (figure 4) un étage de paramétrage, de réception, analyse, traitement et validation de signaux issus des capteurs et retours de marche permet d'alimenter ces différents modules. L'automate reçoit des informations analogiques des différents capteurs utilisés (signal relatif à la concentration des boues en recirculation (Cr), signal représentant la concentration des boues dans le bassin d'aération (Cba), signal représentant le débit traversier (Qt)), et des informations logiques concernant le fonctionnement des équipements tels que pompes de recirculation, pompes d'extraction, convertisseur, équipement d'aération.

On a spécifié ci-dessus que pour satisfaire la maîtrise des temps de séjour des boues en clarification secondaire et l'assistance des extractions, la logique de gestion automatisée de la recirculation des boues selon l'invention, doit répondre à trois principes majeurs :

- L'adaptation régulière du taux de recirculation moyen aux conditions rencontrées sur la station. En effet, une variation sur une gamme de 50 à plus de 400 % peut être aisément rencontrée sur une année, dès lors que l'indice de Mohlman ou la masse totale des boues varie sur le site.

- La réponse instantanée aux événements hydrauliques et la gestion des délais d'actions, en fonction du temps de réponse du système clarificateur - bassin d'aération. Cet élément est important pour coordonner les phénomènes de stockage et de déstockage des boues dans les clarificateurs, et éviter une accumulation des boues trop longue entraînant des conditions anaérobies.

- Le maintien d'une concentration de boues constante en recirculation. Cette régularité permet d'optimiser le fonctionnement de certains équipements de la filière boues fonctionnant en flux tendu, lorsque les lignes de recirculation et d'extraction sont couplées.

On explicitera ci-après ces trois principes :

1 - Adaptation du taux de recirculation aux conditions rencontrées sur la station.

De façon à fiabiliser le traitement des eaux, il est important de réactualiser régulièrement la consigne relative au taux de recirculation ($\tau$ Rec) , de manière adaptée aux conditions d'exploitation.

Hors accident (entrée d'hydrocarbures, de solutions salines,...), la dynamique de l'évolution de l'indice de décantation (Id) est de l'ordre de 50 ml/g au maximum par semaine pour les faibles charges. La concentration de boues (Cba) dans le bassin d'aération peut évoluer assez rapidement, de 0.2 à 0.6 g/l par jour selon la charge de la station, en cas de panne sur la ligne d'extraction ou sur la filière de traitement des boues.

Ce type de modification des conditions peut entraîner la nécessité d'une augmentation importante et rapide du taux de recirculation, principalement dans les cas de cumul de conditions limitantes (Cba et Id forts). A défaut, le taux de recirculation des boues sera trop faible et les temps de séjour des boues en clarification augmentera, au risque d'initier ou d'entretenir un dysfonctionnement sur la filière de traitement des eaux

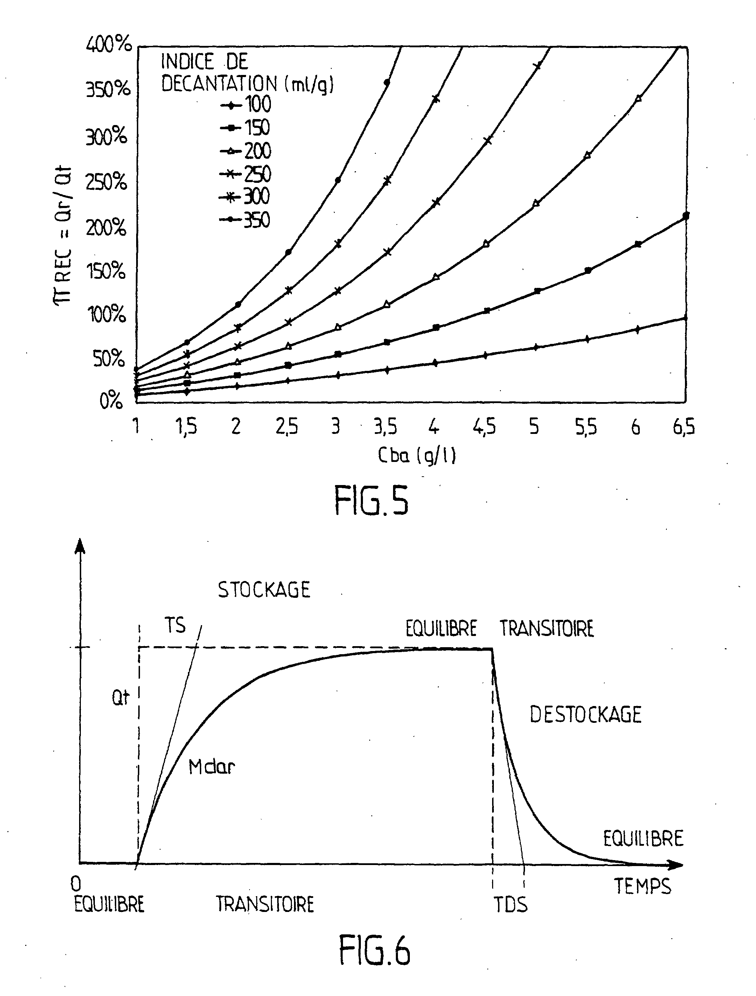

La figure 5 illustré l'évolution du taux de recirculation ($\tau$ Rec) nécessaire en fonction des conditions d'exploitation Cba et Id, à charge massique constante (Temps de séjour des boues en clarification : TS = 120 min).

Les informations sur les conditions d'exploitation sont reçues d'une part par le capteur de concentration Cba, d'autre part grâce à la réactualisation de la mesure de Id par les exploitants, en cohérence avec la fréquence des tests d'autocontrôle et de suivi du procédé. Le taux de recirculation de boues est alors automatiquement adapté dans l'automate, ce qui par constat est rarement effectué lorsque des consignes de réglages manuels sont nécessaires.

2 - Réponse aux événements hydrauliques et gestion des délais d'action.

Lors de la modification importante des régimes hydrauliques sur la station, il faut modifier les délais de réponse des actions engagées. Le calcul basé sur la notion d'équilibre n'est plus valable en valeurs instantanées ou différées d'une heure. La dynamique de transfert des boues entre les différents ouvrages doit être prise en compte.

Une forte augmentation du débit traversier (Qt) conduit à un transfert progressif des boues vers le clarificateur secondaire. Le terme de stockage dans le bilan des flux de boues en clarification n'est plus négligeable. Le volume important du bassin d'aération génère un effet tampon, il a un rôle d'amortissement sur la vitesse de stockage des boues dans le clarificateur secondaire. La forte masse de boues en clarification calculée à partir de la notion d'équilibre ne sera présente que lorsque le fort régime hydraulique sera maintenu pendant plusieurs heures.

La figure 6 est une courbe illustrant la dynamique de l'évolution dans le temps des masses de boues en clarification (Mclar).

Une fois ce régime établi, une brutale diminution du débit traversier (Qt) ne permettra pas un transfert immédiat des boues sur le bassin d'aération. Le terme de déstockage dans le bilan des flux de boues en clarification n'est pas, ici non plus, négligeable. Les boues décantées dans le clarificateur secondaire sont reprises au mieux au maximum des débits de recirculation et donc déstockées progressivement sur plusieurs heures.

D'un point de vue mathématique, il est possible de poser les équations de bilan d'entrée et de sortie des flux de boues dans le clarificateur. Il reste que des modèles de sédimentation doivent être utilisés pour simuler la répartition des boues et la modification spatiale et temporelle de leurs concentrations dans le voile dé boues. Sous réserve de simplifications, il est toutefois possible d'obtenir une équation différentielle du premier ordre représentant l'évolution de la masse de boues contenue dans le clarificateur. Cette équation permet de définir des temps de réponse du système, caractéristiques de l'établissement de régimes d'équilibre pour la répartition des masse de boues sur l'étage biologique.

Ainsi, à la suite d'une augmentation du régime hydraulique, le temps de stockage (TS) est représentatif du temps nécessaire pour accumuler une masse de boues dite d'équilibre dans le clarificateur. A l'inverse, le temps de déstockage (TDS) est caractéristique du temps requis pour vidanger une partie des boues et se positionner sur un équilibre après passage à un régime hydraulique plus faible. Par définition, ces valeurs (TS) et (TDS) ne peuvent pas être fixées pour un site. Elles sont dépendantes des débits présents sur la station, de la disponibilité des équipements de recirculation, et pour (TDS) de la concentration de boues dans le bassin d'aération.

En termes pratiques, la résultante de cette notion de dynamique du système est qu'il faut modifier les délais d'action de la gestion de la recirculation en cas de modification importante du régime hydraulique (pluie principalement).

- Lors de la détection d'une augmentation brutale du débit traversier, il n'est pas souhaitable de trop attendre pour augmenter le débit de recirculation, ce qui risquerait d'accélérer le processus de stockage des boues dans le clarificateur. Une réponse immédiate de la logique de gestion est ainsi souhaitable.

- Après un événement pluvieux, si la réduction du débit traversier est progressive, la réactualisation automatique du débit de recirculation permettra d'elle même un déstockage progressif des boues présentes en clarification. A l'inverse, si cette réduction est brutale, le calcul réactualisé conduira à un régime de recirculation faible, alors qu'une quantité de boues importante sera toujours en clarification. Le déstockage sera alors trop long, et le temps de séjour réel des boues dépassera aisément la douzaine d'heures. Il faut donc poursuivre les actions de forte recirculation initiées pendant la pluie, et les maintenir jusqu'au déstockage réel de l'ensemble des boues présentes dans le clarificateur. Cette action de forçage a une durée dépendante des conditions présentes sur le système, cette durée de forçage est généralement comprise entre 1 et 8 heures.

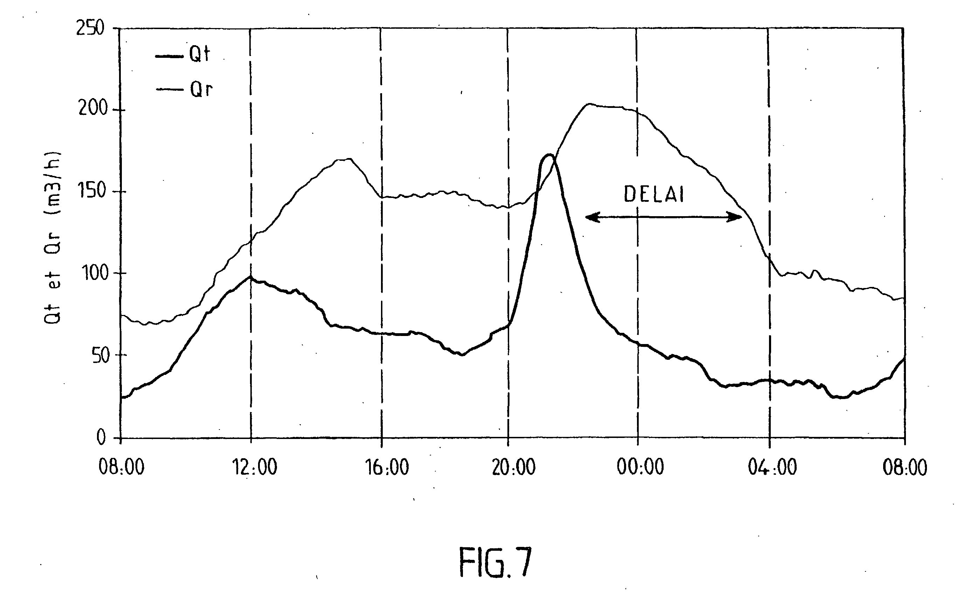

La figure 7 des dessins annexés qui illustre l'évolution dans le temps du débit de recirculation (Qr) et du débit traversier (Qt) montre l'action du maintien d'un fort débit de recirculation pour le déstockage après un événement pluvieux (mode de régulation). Un délai réel de 4 heures est nécessaire pour répondre dans ce cas à la décroissance des débits traversiers.

3 - Maintien des concentrations de boues constantes en recirculation.

Le maintien d'une concentration de boues recirculées constante permet d'assister les opérations d'exploitation lorsque l'alimentation de la filière de traitement des boues s'effectue à partir de la ligne de recirculation. Certains équipements initiant la filière de traitement des boues. tels que grilles ou tables d'égouttage, sont soumis a des contraintes de régularité de charge d'alimentation, principalement pour des raisons de réglages et d'adjonction d'agents de stabilisation ou flocculation.

L'adaptation instantanée du débit de recirculation au régime hydraulique de la station permet de gommer les variations de concentrations de boues recirculées induites par l'effet des pointes ou des creux de débit traversier, et de lisser les conséquences du passage du pont racleur sur les conduites de reprise des boues en clarification.

D'autre part, le syncopage des pompes de recirculation conduit à des variations de concentrations de forte amplitude qui limitent les performances des équipements d'épaississement. L'utilisation d'un convertisseur de fréquence pour l'alimentation des pompes de recirculation permet à l'opposé de moduler les débits générés, tout en maintenant une continuité dans les flux de boues recirculés. L'alimentation de la filière de traitement est ainsi adaptée, grâce à la disponibilité d'une charge continue et constante pour les équipements.

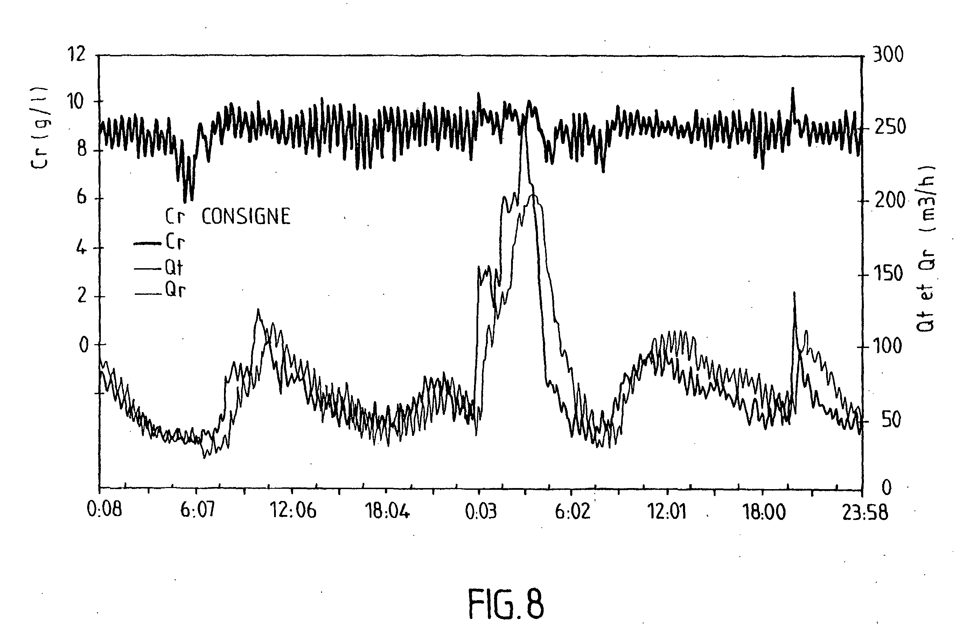

La figure 8 illustre l'évolution dans le temps de la concentration des boues en recirculation (Cr), du débit traversier (Qt) et du débit de recirculation (Qr), ces courbes font ressortir le maintien d'une concentration de boues constante en recirculation en conditions pluvieuses.

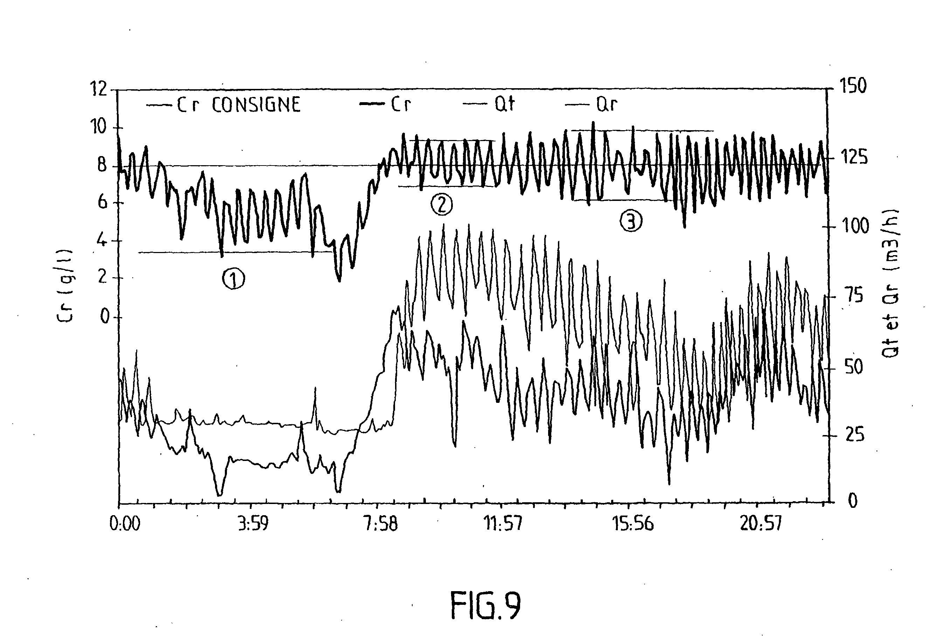

On se réfère maintenant aux figures 9 à 12 qui sont des enregistrements illustrant le fonctionnement du procédé et du dispositif selon l'invention respectivement dans des conditions :

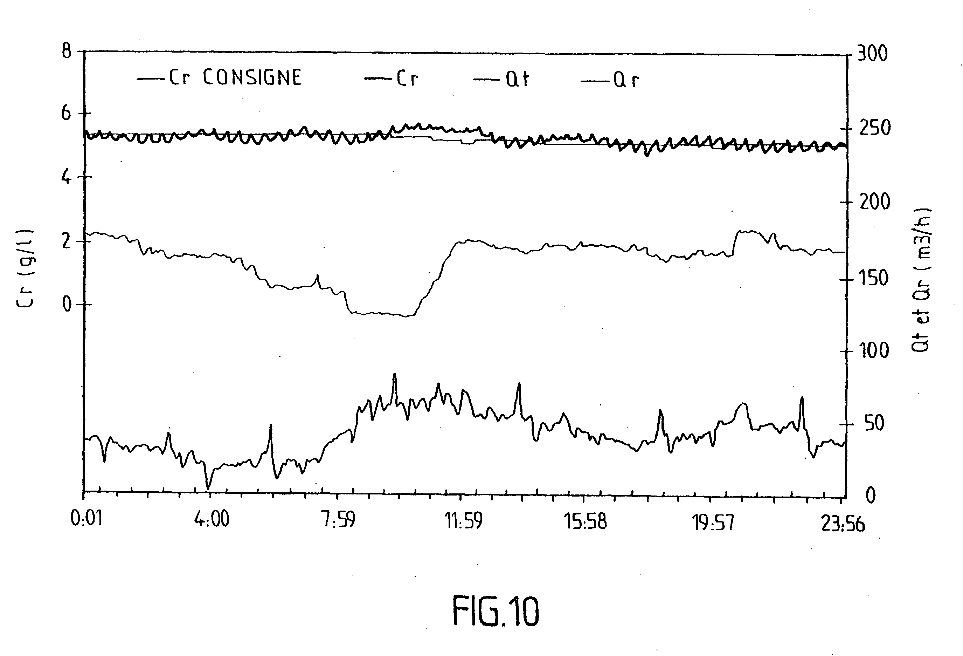

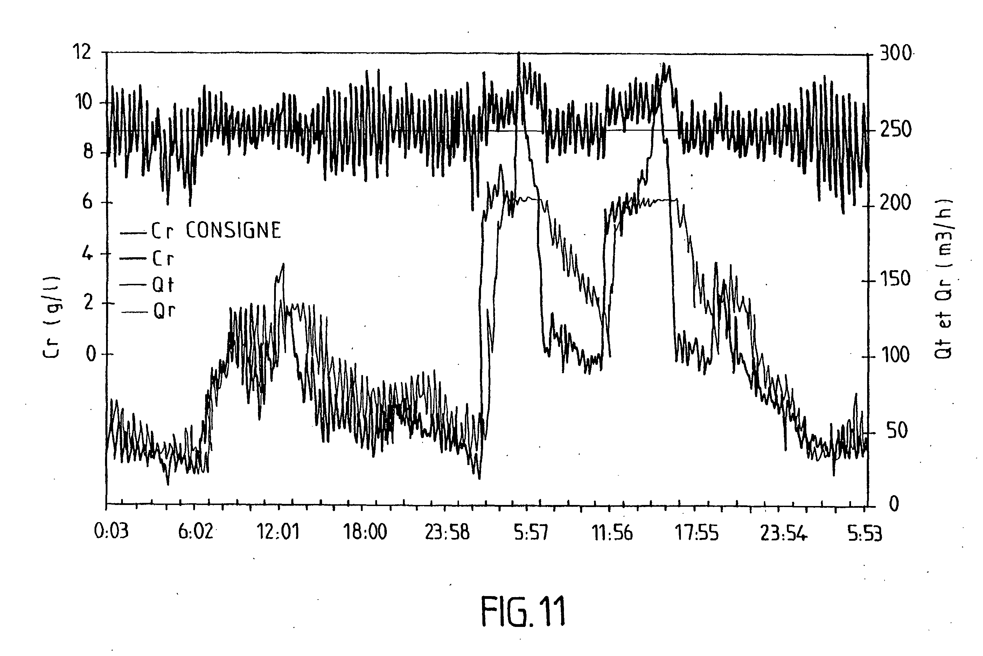

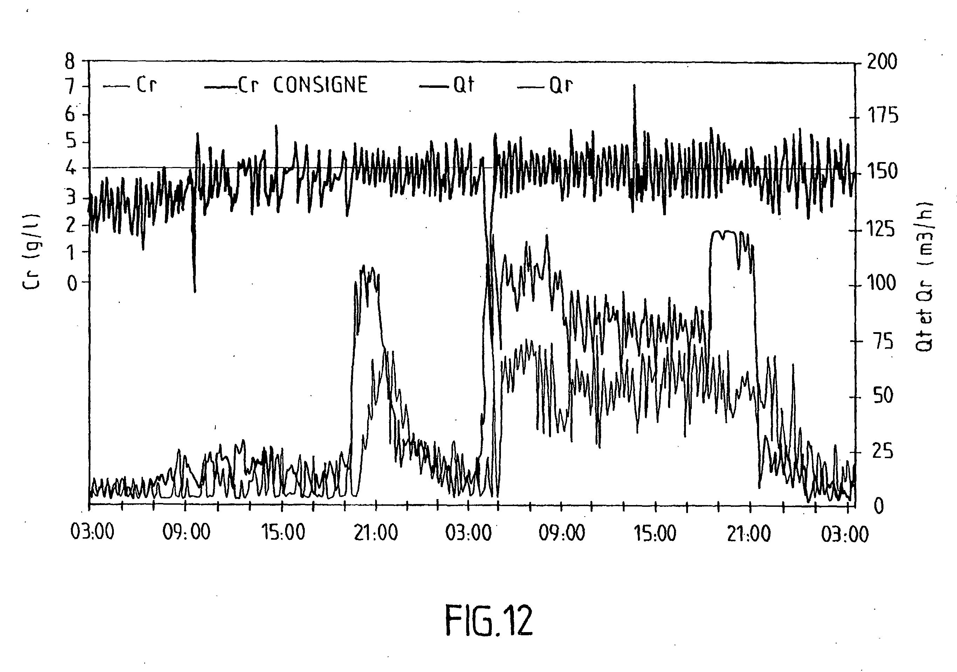

- de temps sec, mode régulé ( figures 9 et 10);
- de temps pluvieux, mode régulé (figures 11 et 12).

On explicitera ci-après l'interprétation de ces divers enregistrements qui permettent de bien faire ressortir les résultats apportés par l'invention.

**Enregistrements types en temps sec - Mode régulé.**

La figure 9 illustre l'évolution dans le temps de la concentration des boues en recirculation (Cr) du débit traversier (Qt) et du débit de recirculation (Qr) pour un régime hydraulique type de temps sec, l'automate fonctionnant en mode régulé. Cette figure montre une évolution habituelle du débit entrant sur la station sur une durée journalière. La concentration de consigne de recirculation de 8 g/l est tenue en période diurne, mais la concentration réelle est plus faible en période nocturne. Des oscillations régulières de la concentration de recirculation sont notables, leur fréquence de 25 minutes correspond au temps de passage du pont tournant du clarificateur. En effet, des zones où les boues sont en quantité plus où moins importantes ont été mises en évidence dans l'ouvrage de clarification. Ainsi, lorsque le pont se positionne au dessus de la zone de reprise du puits à boues, la concentration enregistrée augmente et inversement quand celui-ci s'éloigne. Cela induit alors les variations de concentration observées.

Durant la période nocturne, correspondant à l'annotation ❶, la concentration ne peut plus atteindre la concentration de consigne. Elle varie de 4 à 7 g/l car le débit de recirculation minimum est trop fort pour permettre d'atteindre la valeur consigne.

Lorsque le débit devient plus élevé, lors de la pointe de 8h (annotation ❷), la concentration varie entre 7 et 9 g/l. l'automate régule donc dans ces conditions hydrauliques la concentration de recirculation entre la concentration de consigne à plus ou moins 1 g/l de variation.

Durant la période diurne lorsque le débit devient faible, pour des horaires de 12h à 22h (annotation ❸), la concentration de recirculation varie de 6,5 à 9,5 g/l. L'automate augmente sa gamme de variation à ± 1,5 g/l.

Ces variations de 10 à 20 % en période diurne sont tout à fait acceptables.

Les variations de concentration mentionnées ont disparu après vidange du clarificateur. Il a été vu qu'un amas de boues compactes comblait une grande partie de la fosse de reprise des boues située dans le fond de l'ouvrage. Le racleur de cette fosse avait aussi été arraché. Les boues solidifiées ont été évacuées et un nouveau racleur installé. Les variations de concentrations liées au passage du pont ne sont alors plus apparues. L'enregistrement correspondant est illustré par la figure 10. Cette figure correspondant à une configuration idéale pour la reprise des boues, en mode régulé, pour un régime hydraulique type de temps sec. On notera que les régimes nocturnes peuvent toutefois être soumis à des diminutions de concentrations de boues par rapport à la consigne, si les débits minimaux de recirculation sont atteints.

**Enregistrements types en temps pluvieux - Mode régulé.**

La figure 11 illustre également l'évolution dans le temps de la concentration des boues en recirculation (Cr), du débit traversier (Qt) et du débit des boues en recirculation (Qr) en mode régulé, pour des régimes hydrauliques de temps pluvieux. Cette figure montre l'évolution de la concentration sur deux journées pluvieuses, la première en conditions légèrement modifiées par rapport au temps sec, la seconde en régime hydraulique fort. Sur la première journée, l'augmentation courte du débit à 150 m3/h vers 14h00 conduit la régulation de l'automate a modifier le débit de recirculation en conséquence, de façon à maintenir une concentration de boues à la consigne souhaitée. A nouveau pour cette période, il est intéressant de noter la réduction de l'amplitude des variations de concentrations, qui traduit une plus grande facilité de régulation lorsque le clarificateur est chargé en boues. La seconde journée est caractéristique d'un régime hydraulique extrême. L'automate reste en mode régulé, et accompagne l'augmentation forte du débit traversier vers 3h00 par une augmentation du débit de recirculation jusqu'à saturation. Au delà, les concentrations de boues en recirculation ne peuvent plus être maîtrisées et se trouvent en excès par rapport à la consigne. La situation se rétablit après la diminution brusque du débit traversier, et le débit de recirculation reste fort pour tenir la consigne de concentration en recirculation. Le deuxième événement hydraulique vers 12h00 montre le même comportement de l'automate. Il est intéressant de noter le déphasage des débits traversiers et de recirculation lors de leur décroissance progressive, qui traduit la dynamique des phénomènes de décantation des boues en clarification et de leur transfert entre les différents ouvrages.

Le deuxième exemple illustré par la figure 12 qui illustre des courbes similaires à celles de la figure 11, permet de visualiser le comportement de l'automate en mode régulé pour deux événements hydrauliques d'amplitude identique, mais de durées différentes. Les débits de recirculation augmentent jusqu'à une même valeur, la réponse de l'automate est adaptée à la durée de la pluie, les déphasages existent dans les deux cas. Il faut noter que, comparé à celui de la première pluie, le temps de déstockage du deuxième événement paraît plus important, car la longueur de l'événement hydraulique a porté la station sur un régime d'équilibre complet.

Le procédé et le dispositif de gestion automatisée de la recirculation des boues selon l'invention sont applicables à toute station d'épuration mettant en oeuvre un procédé à boues activées et comportant un clarificateur autorisant des variations notables du débit de recirculation de boues. Aucune autre contrainte technique n'est référencée pour la filière de traitement des eaux.

Selon un mode de mise en oeuvre, l'homogénéité du bassin d'aération est assurée par une dissociation aération/brassage. Si cette homogénéité ne peut être acquise, il est toujours possible de gérer la recirculation des boues par la logique décrite ci-dessus, sous réserve que l'information de concentration des boues dans le bassin d'aération soit représentative de l'entrée des boues dans le clarificateur, de façon à permettre le calcul du bilan d'entrée et de sortie des masses de boues dans cet ouvrage. De plus, et moyennant la non prise en compte des valeurs de la concentration des boues dans le bassin d'aération (Cba), hors aération, l'estimation de la masse totale de boues dans le système est toujours possible.

La mise en oeuvre de l'invention peut être réalisée soit avec des ouvrages d'aération mono-bassin, soit avec toute configuration de station à plusieurs bassins dans l'étage biologique, sous condition de poser à nouveau les équations de bilan d'entrée et de sortie des masses de boues dans le clarificateur, et d'intégrer éventuellement les contraintes de débit minimal ou maximal sur certains ouvrages. La présence d'ouvrages spécifiques à des conditions d'anaérobie, d'anoxie, d'état endogène, ou d'ouvrages d'aération multi-bassins ne constitue pas un obstacle à la mise en oeuvre de l'invention. L'ajout de capteurs ou compteurs de débits, et de concentrations de boues peut être nécessaire dans le cas de bassins biologiques multiples.

De même, l'invention peut s'appliquer à une installation comportant soit un clarificateur secondaire, soit plusieurs clarificateurs, en prévoyant des capteurs et des organes de commande sur toutes les lignes de recirculation des boues. Si l'équilibrage des lignes de traitement des eaux ne peut être mis en doute, la gestion sur un mode identique peut être acceptée.

En outre, la commande des débits de recirculation peut être gérée à partir de pompes de recirculation alimentées par un convertisseur de fréquence, comme on l'a décrit ci-dessus, cependant l'utilisation d'autres équipements (vis de relevage, vannes automatisées, ...) peut être envisagée.

Enfin, en ce qui concerne la filière de traitement des boues, il n'existe aucune contrainte technique. Pour cette filière, il reste que l'intérêt de la mise en oeuvre de l'invention réside dans l'alimentation des équipements en flux tendu, directement à partir de la ligne de recirculation (grilles et tables d'égouttage).

Parmi les avantages apportés par la présente invention, on peut citer notamment les suivants :

- Amélioration de la qualité des boues avec une réduction de la valeur moyenne de l'indice de Mohlman. Cette amélioration conduit à une optimisation des résultats des équipements d'épaississement et de déshydratation en filière boues (augmentation de la capacité et réduction du temps de fonctionnement des ouvrages et équipements, amélioration de la siccité et réduction des volumes et des coûts d'évacuation des boues produites, économie sur la consommation de réactifs, réduction retours en tête...). Potentiellement, c'est le poste majeur pour la réduction des coûts d'exploitation.

- Assistance pour le traitement des boues et suppression des dysfonctionnements en égouttage (Organisation main d'oeuvre en exploitation).

- Conformité des rejets (Conventions et Primes Agences de l'Eau).

- Prévention des dysfonctionnements, notamment sous des conditions extrêmes d'exploitation et durant les événements pluvieux (Organisation main-d'oeuvre et prévention de coût pour le traitement des dysfonctionnements).

- Aspect visuel du clarificateur (Gestion de l'image de l'exploitation).

Il demeure bien entendu que la présente invention n'est pas limitée aux exemples de réalisation décrits et/ou représentés ici mais qu'ellle en englobe toutes les variantes.

## Revendications

**1.** Procédé de contrôle du temps de séjour des boues en clarification dans un processus de traitement d'eaux usées par boues activées comportant une recirculation des boues activées de l'étape de clarification vers les bassins biologiques **caractérisé en ce que** l'on module le débit de recirculation des boues (Qr) de façon à maintenir une concentration constante des boues recirculées (Cr) tout en garantissant un temps de séjour (TS) des boues en clarification inférieur à une valeur critique (TS max).

**2.** Procédé selon la revendication 1 **caractérisé en ce que** le débit de recirculation des boues (Qr) est modulé en fonction d'un signal représentant le débit d'eau (Qt) traversant l'installation, afin de limiter le temps de séjour des boues dans l'étape de clarification.

**3.** Procédé selon la revendication 2 **caractérisé en ce que**, lorsque la validité dudit signal n'est pas reconnue, le contrôle de la recirculation s'effectue selon le mode de gestion de repli de la station de traitement d'eau.

**4.** Procédé selon la revendication 1 **caractérisé en ce que** le débit de recirculation des boues (Qr) est modulé en fonction d'un signal représentant la concentration de boues en recirculation (Cr), obtenu à partir d'un capteur positionné dans la ligne de recirculation, ce signal étant délivré à une logique automatisée qui module le débit de recirculation (Or) en fonction de l'évolution du signal reçu, afin de maintenir constante la concentration de boues en recirculation (Cr) et **en ce que**, en cas de doutes sur la représentativité dudit signal, le contrôle de la recirculation des boues s'effectue automatiquement selon un mode de gestion asservie ayant pour objectif de limiter le temps de séjour des boues dans l'étape de clarification, ledit mode de gestion asservie étant géré sur l'analyse des valeurs de la concentration des boues (Cba) dans le bassin biologique et sur le débit d'eau (Qt) traversant l'installation.

**5.** Procédé selon la revendication 4 **caractérisé en ce que**, lorsque la validité du signal délivré par ledit capteur n'est pas reconnue, le contrôle de la recirculation s'effectue selon le mode de gestion de repli de la station de traitement d'eau.

**6.** Procédé selon l'une quelconque des revendications précédentes **caractérisé en ce que** l'on mesure périodiquement le volume des boues décantées afin d'évaluer l'indice de décantation des boues (Id) ainsi que la concentration des boues (Cba) dans le bassin biologique et de déterminer les valeurs de consigne de l'automate de gestion.

7. Procédé selon l'une quelconque des revendications précédentes **caractérisé en ce que** la logique de gestion automatisée de la recirculation des boues est conçue de façon à :

- réactualiser régulièrement le taux de recirculation moyen ($\tau$ Rec) des boues afin de l'adapter aux conditions de la station de traitement, à partir de la valeur de la concentration des boues (Cba) dans le bassin d'aération et de la réactualisation de l'indice de décantation (Id);

- répondre instantanément aux évènements hydrauliques et gérer les délais d'action en fonction du temps de réponse du système clarificateur-bassin d'aération en se basant sur l'évolution du débit traversier (Qt) et,

- maintenir constante la concentration des boues en recirculation (Cr).

8. Dispositif pour la mise en oeuvre du procédé selon l'une quelconque des revendications 1 à 5 **caractérisé en ce qu'**il comporte :

- des capteurs permettant respectivement de mesurer le débit traversier (Qt) ;

- des moyens assurant une commande modulée dudit débit de recirculation des boues activées (Qr),

- des moyens permettant de mesurer le volume des boues décantées et d'évaluer l'indice de décantation (Id) et la concentration de boues (Cba) dans le bassin biologique,

- un automate assurant la gestion automatisée de la recirculation qui comporte deux modules principaux, servis par un étage commun d'entrée de signaux :

   - un premier module (A) assurant l'interface entre l'utilisateur et l'automate et permettant d'afficher une consigne de concentration (Cr),
   - un second module (B) constituant le bloc de commande des débits de recirculation et qui comprend :

      - une logique de commande (B2) assurant la maîtrise du temps de séjour des boues dans le clarificateur à partir du débit traversier (Qt), pour calculer une commande du débit de recirculation (Qr),

   - un module (B3) pour la gestion des actions de sécurisation de la logique de gestion des moyens de recirculation et,

- un étage de paramétrage, de réception, d'analyse de traitement et de validation des signaux issus des capteurs et témoins logiques de marche des équipement pour alimenter lesdits modules.

9. Dispositif pour la mise en oeuvre du procédé selon l'une quelconques des revendications 1, 4 et 5 **caractérisé en ce qu'**il qu'il comporte :

- des capteurs permettant respectivement de mesurer :

   - la concentration des boues (Cr) dans la ligne de recirculation des boues activées du clarificateur vers le bassin d'aération,
   - la concentration des boues (Cba) dans le bassin d'aération,
   - le débit traversier (Qt)

- des moyens assurant une commande modulée dudit débit de recirculation des boues activées (Qr),
- des moyens permettant de mesurer le volume des boues décantées et d'évaluer l'indice de décantation (Id),
  un automate assurant la gestion automatisée de la recirculation qui comporte trois modules principaux, servis par un étage commun d'entrée de signaux :

   - un premier module (A) assurant l'interface entre l'utilisateur et l'automate et premettant d'afficher une consigne de concentration (Cr)
   - un second module (B) constituant le bloc de commande des débits de recirculation et qui comprend :

      - une logique de commande (B1) assurant le pilotage et la régulation du débit de recirculation (Qr) à partir de la mesure de la concentration des boues (Cr) pour maintenir constante la concentration de recirculation,
      - une logique de commande (B2) assurant la maîtrise du temps de séjour des boues dans le ciarificateur à partir des mesures de la concentration des boues dans le bassin d'aération (Cba) et du débit traversier (Qt), pour calculer une commande du débit de recirculation (Qr),

- un module (B3) pour la gestion des actions de sécurisation de la logique de gestion des moyens de recirculation et,

- un troisième module ( C) assurant un calcul de la masse de boues présente dans le système clarificateur/bassin biologique en vue de fixer et de rythmer l'extraction des boues et,

- un étage de paramétrage, de réception, d'analyse de traitement et de validation des signaux issus des capteurs et témoins logiques de marche des équipement pour alimenter lesdits modules.

10. Dispositif selon la revendication 9 **caractérisé en ce que** le module (A) est conçu de façon à permettre le renseignement manuel de mesures et de souhaits de consignes, la vérification de compatibilité entre les contraites du processus de traitement et les consignes souhaitées ainsi que l'affichage des données de fonctionnement et des informations issues de l'automate.

11. Dispositif selon la revendication 9 **caractérisé en ce que** ledit étage de paramétrage, de réception, d'analyse de traitement et de validation des signaux reçoit d'une part des informations analogiques des différents capteurs utilisés et d'autre part, des informations logiques concernant le fonctionnement des équipements tels que pompes de recirculation et leurs systèmes de commande et équipements d'aération.

12. Dispositif selon l'une quelconque des revendications 9 à 11 **caractérisé en ce que** la commande du débit des pompes assurant la recirculation des boues s'effectue par l'intermédiaire d'un convertisseur de fréquence.

**Claims**

1. Method for checking the residence time of sludge in the clarification stage in an activated sludge-based waste water treatment process involving a recycling of activated sludge from the clarification stage to biological tanks, **characterized in that** the recycling flow rate of the sludge (Qr) is modified so as to maintain a constant recycled sludge concentration (Cr), whilst still guaranteeing a sludge residence time (TS) in clarification lower than a critical value (max TS).

2. Method according to claim 1, **characterized in that** the sludge recycling flow rate (Qr) is modified as a function of a signal representing the water flow rate (Qt) traversing the installation in order to limit the sludge residence time in the clarification stage.

3. Method according to claim 2, **characterized in that** when the validity of said signal is not recognized, the recycling is checked in accordance with the fall-back management mode of the water treatment station.

4. Method according to claim 1, **characterized in that** the sludge recycling flow rate (Qr) is modified as a function of a signal representing the concentration of sludge being recycled (Cr), obtained from a sensor located in the recycling line, said signal being supplied to an automated logic, which modifies the recycling flow rate (Qr) as a function of the evolution of the signal received, so as to keep constant the sludge concentration being recycled (Cr) and **in that**, in the case of doubts concerning the representativeness of said signal, the checking of the recycling of the sludge takes place automatically in accordance with a dependent management mode whose objective is to limit the sludge residence time in the clarification stage, said dependent management mode being managed on the basis of the analysis of values of the sludge concentration (Cba) in the biological tank and regarding the water flow rate (Qt) traversing the installation.

5. Method according to claim 4, **characterized in that** when the validation of the signal supplied by said sensor is not recognized, the checking of the recycling takes place according to the fall-back management mode of the water treatment station.

6. Method according to any one of the preceding claims, **characterized in that** a periodic measurement takes place of the settled sludge volume in order to evaluate the sludge settling index (Id), as well as the sludge concentration (Cba) in the biological tank and determine the guide values of the management controller.

7. Method according to any one of the preceding claims, **characterized in that** the automated sludge recycling management logic is designed so as to:

- regularly update the mean recycling rate (rec τ) of the sludge in order to adapt it to the conditions of the treatment station, on the basis of the value of the sludge concentration (Cba) in the aeration tank and the updating again of the settling index (Id),

- respond instantaneously to hydraulic events and manage action delays as a function of the response time of the clarifier-aeration tank system using as a basis the evolution of the through flow (Qt) and

- maintain constant the sludge concentration being recycled (Cr).

8. Apparatus for performing the method according to any one of the claims 1 to 5, **characterized in that** it comprises:

- sensors respectively making it possible to measure the through flow (Qt),

- means ensuring a modified control of said activated sludge recycling flow (Qr),

- means permitting the measurement of the settled sludge volume and the evaluation of the settling index (Id) and the sludge concentration (Cba) in the biological tank,

- a controller ensuring the automated management of the recycling and comprising two main modules, served by a common signal input stage:

  - a first module (A) ensuring the interface between the user and the controller and permitting the display of a concentration guide value (Cr),

  - a second module (B) constituting the recycling flow rate control unit and which comprises:

    - a control logic (B2) ensuring the control of the sludge residence time in the clarifier on the basis of the through flow (Qt) in order to calculate a control of the recycling flow rate (Qr),

    - a module (B3) for the management of the securing actions of the management logic of the recycling means and

- a stage for the parametrization, reception, treatment analysis and validation of signals from sensors and equipment operation logic indicators for supplying said modules.

9. Apparatus for performing the method according to any one of the claims 1, 4 and 5, **characterized in**

**that** it comprises:

- sensors respectively making it possible to measure the concentration of sludge (Cr) in the line for recycling the activated sludge from the clarifier to the aeration tank, the concentration of sludge (Cba) in the aeration tank and the through flow (Qt),

- means ensuring a modified control of said activated sludge recycling flow rte (Qr),

- means making it possible to measure the settled sludge volume and evaluate the settling index (Id),

- a controller ensuring the automated management of the recycling and comprising three main modules, served by a common signal input stage:

  - a first module (A) ensuring the interface between the user and the controller and permitting the display of a concentration guide value (Cr),

  - a second module (B) constituting the recycling flow rate control unit and comprising:

    - a control logic (B1) ensuring the control and regulation of the recycling flow rate (Qr) on the basis of the measurement of the concentration of the sludge (Cr) in order to keep the recycling concentration constant,
    - a control logic (B2) ensuring the control of the sludge residence time in the clarifier on the basis of measurements of the concentration of the sludge in the aeration tank (Cba) and the through flow (Qt), in order to calculate a recycling flow rate control (Qr),
    - a module (B3) for managing the securing actions of the management logic of the recycling means and

  - a third module (C) ensuring a calculation of the sludge mass present in the clarifier-biological tank system with a view to fixing and timing sludge extraction and

  - a stage for the parametrization, reception, treatment analysis and validation of signals from the sensors and equipment operation logic indicators for supplying said modules.

10. Apparatus according to claim 9, **characterized in that** the module (A) is designed so as to provide manual information on measurements and desired guide values, the verification of compatibility between constraints on the treatment process and desired guide values, as well as the display of operating data and information from the controller.

11. Apparatus according to claim 9, **characterized in that** the stage for the parametrization, reception, treatment analysis and validation of signals on the one hand receives analog information from different sensors used and on the other logic information concerning the operation of the equipment such as recycling pumps and their control systems and aeration equipment.

12. Apparatus according to any one of the claims 9 to 11, **characterized in that** the control of the delivery of pumps ensuring the recycling of sludge takes place by means of a frequency converter.

**Patentansprüche**

1. Verfahren zum Steuern der Aufenthaltszeit von Schlämmen in einer Klärung in einem Prozess zur Behandlung von Abwässern durch Belebtschlämme, umfassend eine Rückführung der Belebtschlämme aus der Klärstufe in die biologischen Becken, **dadurch gekennzeichnet, dass** man den Massenstrom (Qr) der Rückführung der Schlämme so moduliert, dass eine konstante Konzentration (Cr) der rückgeführten Schlämme eingehalten wird, wobei zugleich eine Aufenthaltszeit (TS) der Schlämme in der Klärung gewährleistet wird, die geringer als ein kritischer Wert (TS max) ist.

2. Verfahren nach Anspruch 1, **dadurch gekennzeichnet, dass** der Rückführ-Massenatrom (Qr) der Schlämme in Abhängigkeit von einem Signal moduliert wird, welches die die Anlage durchfließende Wassermenge (Qt) repräsentiert, um die Aufenthaltszeit der Schlämme in der Klärstufe zu begrenzen.

3. Verfahren nach Anspruch 2, **dadurch gekennzeichnet, dass**, wenn die Gültigkeit des besagten Signals nicht erkannt wird, die Steuerung der Rückführung entsprechend dem Modus der Notlauf-Führung der Wasserbehandlungsanlage erfolgt.

4. Verfahren nach Anspruch 1, **dadurch gekennzeichnet, dass** der Rückführ-Massenstrom (Qr) der Schlämme in Abhängigkeit von einem die Konzentration (Cr) der in der Rückführung befindlichen Schlämme repräsentierenden Signal moduliert wird, das von einem in der Rückführungsleitung angeordneten Sensor erhalten wird, wobei dieses Signal einer automatischen Verarbeitung zugeführt wird, die den Rückführ-Massenstrom (Qr) in Funktion der Entwicklung des empfangenen Signals moduliert, um die Konzentration (Cr) der in der Rückführung befindlichen Schlämme konstant zu halten, und dadurch, dass im Fall von Zweifeln an der Stimmigkeit des besagten Signals die Steuerung der Rückführung der Schlämme automatisch nach einem Zwangsführungsmodus vollzogen wird, der auf die Begrenzung der Aufenthaltzeit der Schlämme in der Klärstufe abzielt, wobei der besagte Zwangsführungsmodus auf der Basis der Analyse der Werte der Konzentration der Schlämme (Cba) im biologischen Becken und der die Anlage durchfließenden Wassermenge (Qt) geführt wird,

5. Verfahren nach Anspruch 4, **dadurch gekennzeichnet, dass**, wenn die Gültigkeit des von dem besagten Sensor gelieferten Signals nicht erkannt wird, die Steuerung der Rückführung entsprechend dem Modus der Notlauf-Führung der Wasserbehandlungsanlage durchgeführt, wird.

6. Verfahren nach einem der vorstehenden Ansprüche, **dadurch gekennzeichnet, dass** man periodisch das Volumen der abgezogenen Schlämme misst, um den DekantierungsIndex (Id) der Schlämme sowie die Konzentration (Cba) der Schlämme im biologischen Becken auszuwerten, und um die Sollwerte für den Steuerungsautomaten zu bestimmen.

7. Verfahren nach einem der vorstehenden Ansprüche, **dadurch gekennzeichnet, dass** die automatische Führungslogik der Rückführung der Schlämme so konzipiert ist, dass

- regelmäßig der mittlere Rückführungsgrad ($\tau$Rec) der Schlämme reaktualisiert wird, um ihn an die Bedingungen der Behandlungsanlage anzupassen, ausgehend vom Wert der Konzentration (Cba) der Schlämme im Belüftungsbecken und von der Reaktualisierung des Dekantierungs-Index (Id) ;
- sofort auf hydraulische Ereignisse reagiert wird, und die. Aktionsverzögerungen abhängig von der Reaktionszeit des Systems Klärstufe-Belüftungsbecken geführt werden, wobei man sich auf die Entwicklung des Durchfluss-Massenstroms (Qt) stützt, und
- die Konzentration (Cr) der Schlämme in der Rückführung konstant gehalten wird.

8. Vorrichtung zum Durchführen des Verfahrens nach einem der Ansprüche 1 bis 5, **dadurch gekennzeichnet, dass** sie umfasst :

- Sensoren, die jeweils den Durchfluss-Massenstrom (Qt) messen,

- Mittel zum modulierten Steuern des besagten Rückführ-Massenstroms (Qr) der Belebtschlämme,
- Mittel zum Messen des Volumens der abgezogenen Schlämme und zum Auswerten das Dekantierungs-Index (Id) und der Konzentration (Cba) der Schlämme im biologischen Becken,
- einen Automaten zum automatischen Steuern der Rückführung, der zwei Hauptmodule umfasst, die von einer gemeinsamen Signal-Eingangsstufe bedient werden :

  - einen ersten Modul (A) als Schnittstelle zwischen dem Anwender und dem Automaten zum Eingeben eines Sollwerts der Konzentration (Cr),
  - einen zweiten Modul (B), der den Steuerblick für die Rückführ-Massenströme bildet und der umfasst :

    - eine Steuerlogik (B2) zum Führen der Aufenthaltszeit der Schlämme in der Klärstufe ausgehend vorn Durchfluss-Massenstrom (Qt), um eine Steuergröße des Rückführ-Massenstroms (Qr) zu berechnen,
    - einen Modul (B3) zum Führen von Maßnahmen zur Sicherung der Steuerlogik der Rückführungsmittel, und

  - eine Stufe zur Parametrierung, zum Empfang, zur Analyse der Behandlung und zur Bewertung der von den Sensoren und von logischen Anzeigen des Betriebs der Ausrüstung ausgegebenen Signale zum Speisen der besagten Module.

9. Vorrichtung zum Durchführen des Verfahrens nach einem der Ansprüche 1, 4 und 5, **dadurch gekennzeichnet, dass** sie umfasst :

   - Sensoren zum Messen jeweils :

     - der Konzentration (Cr) der Schlämme in der Leitung zum Rückführen der Belebtschlämme von der Klärstufe zum Belüftungsbecken,
     - der Konzentration (Cba) der Schlämme im Belüftungsbecken,
     - des Durchfluss-Massenstroms (Qt),

   - Mittel zum modulierten Steuern des besagten Rückführ-Massenstroms (Qr) der Belebtschlämme,
   - Mittel zum Messen des Volumens der abgezogenen Schlämme und zum Auswerten des Dekantierungs-Index (Id),
   - einen Automaten zum automatischen Steuern der Rückführung, der drei Hauptmodule umfasst, die von einer gemeinsamen Signal-Eingangsstufe bedient werden :

- einen ersten Modul (A) als Schnittstelle zwischen dem Anwender und dem Automaten zum Eingeben eines Sollwerts der Konzentration (Cr),
- einen zweiten Modul (B), der den Steuerblock für die Rückführ-Massensträme bildet und der umfasst :

  - eine Steuerlogik (B1) zum Führen und Regeln des Rückführ-Massenstroms (Qr) ausgehend von der Messung der Konzentration (Cr) der Schlämme, um die Rückführ-Konzentration konstant zu halten,
  - eine Steuerlogik (B2) zum Führen der Aufenthaltszeit der Schlämme in der Klärstufe ausgehend von Messungen der Konzentration (Cba) der Schlämme im Belüftungsbecken und vom Durchfluss-Massenstrom (Qt), um eine Steuergröße des Rückführ-Massenstroms (Qr) zu berechnen,
  - einen Modul (B3) zum Führen von Maßnahmen zur Sicherung der Steuerlogik der Rückführungsmittel, und

- einen dritten Modul (C) zum Berechnen der Masse der im Syscem Klärstufe / biologisches Becken vorhandenen Schlämme, um die Abführung der Schlämme festzulegen und zu Vergleichmäßigen,

- eine Stufe zur Parametrierung, zum Empfang, zur Analyse der Behandlung und zur Bewertung der von den Sensoren und logischen Anzeigen des Betriebs der Ausrüstung ausgegebenen Signale zum Speisen der besagten Module

10. Vorrichtung nach Anspruch 9, **dadurch gekennzeichnet, dass** der Modul (A) so ausgeführt ist, dass er eine manuelle Darstellung der Messungen und der gewünschten Sollwerte, die Prüfung der Kompatibilität zwischen den Anforderungen des Behandlungsprozesses und den gewünschten Sollworten sowie die Anzeige der Arbeitsdaten und der vom Automaten gegebenen Informationen ermöglicht.

11. Vorrichtung nach Anspruch 9, **dadurch gekennzeichnet, dass** die Stufe zur Parametrierung, zum Empfang, zur Analyse der Behandlung und zur Wertung der Signale einerseits analoge Informationen von den einzelnen verwendeten Sensoren erhält und andererseits logische Informationen, die die Arbeitsweise der Ausrüstungen wie Rückführpumpen und ihrer Steuersysteme und der Belüftungsausrüstungen betreffen.

12. Vorrichtung nach einem der Ansprüche 9 bis 11, **dadurch gekennzeichnet, dass** die Steuerung des Massenstroms der Pumpen zur Rückführung der Schlämme mithilfe eines Frequenzumwandlers abläuft.

FIG.1

FIG.2

FIG.3

(*NON DISSOCIATION AERATION BRASSAGE)

FIG.4

FIG.5

FIG.6

FIG.7

FIG.8

FIG.9

FIG.10

EP 1 123 259 B1

FIG.11

EP 1 123 259 B1

FIG.12

EP 1 123 259 B1